# EUROPEAN PATENT APPLICATION

(11) **EP 4 685 273 A1**
(43) Date of publication of application: **28.01.2026**
(21) Application number: 23928383.1
(22) Date of filing: 23.11.2023
(51) Int. Cl.: C25B 11/031, C25B 9/23, C25B 1/04

(54) **MEMBRANE ELECTRODE FOR ALKALINE WATER ELECTROLYSIS FOR HYDROGEN PRODUCTION AND PREPARATION METHOD THEREFOR, AND ELECTROLYTIC CELL**

(30) Priority: 21.03.2023 CN 202310280951
(71) Applicant: China Energy Investment Corporation Limited, Beijing 100011 (CN); National Institute of Clean-and-Low-Carbon Energy, Beijing 102211 (CN)
(72) Inventor: LIU, Yanying, Beijing 102211 (CN); DENG, Tianyin, Beijing 102211 (CN); HE, Guangli, Beijing 102211 (CN)
(74) Representative: Kador & Partner Part mbB
(86) International application number: PCT/CN2023/133684
(87) International publication number: WO 2024/193079

(57) **Abstract**

The present disclosure provides a membrane electrode for hydrogen production by alkaline water electrolysis, a preparation method therefor, and an electrolytic cell. According to the method provided by the present disclosure, a membrane electrode with catalyst layers uniformly and firmly adhered to the surfaces of a membrane can be obtained via a direct coating and hot pressing. The membrane electrode is endowed with good stability, and the obtained membrane electrode exhibits a significantly reduced overpotential for water electrolysis. The method comprises the following steps: directly applying a catalyst slurry (catalyst slurries) onto both sides of a membrane, followed by drying and hot pressing the catalyst slurry (catalyst slurries) to form catalyst layers on each surface of the membrane to obtain the membrane electrode. The membrane is selected from a porous membrane or an alkaline anion exchange membrane; the catalyst slurry comprises a binder solution and a catalyst, wherein the binder solution is one or more selected from a perfluorosulfonic acid resin solution and a perfluorosulfonic acid ionomer dispersion, and the mass concentration of the binder solution is 5% to 30%; and the mass ratio of the binder solution to the catalyst is 1:1 to 4:1.

## Description

### TECHNICAL FIELD

The present disclosure relates to the technical field of hydrogen production by alkaline water electrolysis, and specifically to a membrane electrode for hydrogen production by alkaline water electrolysis and a preparation method therefor and an electrolytic cell.

### BACKGROUND

Hydrogen production by water electrolysis represents the most effective approach to developing clean and pollution-free hydrogen energy. Technologies for hydrogen production by water electrolysis includes proton exchange membrane water electrolysis, alkaline water electrolysis, solid oxide water electrolysis, and anion exchange membrane water electrolysis. At present, hydrogen production by alkaline water electrolysis dominates the water electrolysis industry with relatively mature technology and low equipment cost, making it an important means of achieving large-scale hydrogen production. However, one of the existing challenges is high energy consumption. In the hydrogen production process, the membrane and electrode serve as the core components of the electrolytic cell for alkaline water electrolysis. In conventional electrolytic cells, a discrete "membrane-electrode" structure is used, which tends to generate significant overpotential during operation, thereby leading to the issue of high energy consumption. Consequently, the development of novel membrane electrodes constitutes a key breakthrough for reducing the energy consumption per unit of hydrogen production.

However, the development of membrane electrodes suitable for alkaline water electrolysis technology remains confronted with numerous technical challenges that must be addressed. While integrated membrane electrodes have been proposed for proton exchange membrane water electrolysis, the fundamental differences between the proton exchange membranes and the non-proton exchange membranes (e.g., porous membranes and alkaline ion exchange membranes) used in alkaline water electrolysis mean that the membrane electrode preparation technology tailored for the proton exchange membrane water electrolysis cannot be directly applied to the membrane electrodes for alkaline water electrolysis. These two types of base membranes exhibit significant differences in their properties: proton exchange membranes are polymer electrolyte films bearing cation exchange groups (e.g., sulfonate groups, carboxylate groups, and phosphate groups, etc.), whereas porous membranes and alkaline ion exchange membranes are membranes that enable anion conduction in an aqueous environment while preventing the passage of cations and other neutral molecules. The preparation of membrane electrodes must take into account the compatibility between the slurry and the base membrane, as the type or polarity of the solvent in the slurry can affect the base membrane. For proton exchange membrane water electrolysis, the preparation of membrane electrodes typically employs transfer printing techniques. Due to the swelling of the base membrane induced by the solvent employed, the slurry cannot be directly coated onto the base membrane. Accordingly, the membrane electrode preparation technology employed in the proton exchange membrane water electrolysis cannot be directly applied to the membrane electrodes for alkaline water electrolysis.

Patent application CN115074775A discloses an integrated composite membrane comprising a diaphragm layer, an anode catalyst layer, a hydrogen evolution cathode catalyst layer, an anode conductive mesh and a cathode conductive mesh. The two catalyst layers are prepared by a hot-pressing method after slurry is applied onto both sides of the diaphragm layer, forming an integrated structure where the layers are tightly fused to reduce contact resistance. Both the anode catalyst layer and the hydrogen evolution cathode catalyst layer have larger pore sizes than the diaphragm layer, with their pore sizes gradually increasing from the inner side to the outer side. This configuration enables gas to diffuse toward the outside of the diaphragm, thereby reducing gas transmembrane transport and gas trapping phenomena. The application states that the composite membrane provided by the present invention integrates the functions and structures of electron conduction, electrocatalytic cathodic hydrogen evolution, anodic oxidation and ion conduction. This integration enhances the operating performance under high current density, facilitates an increase in hydrogen production rate of electrolysis equipment, and reduces cost. According to this patent application, gradually increasing the pore size of the hydrogen evolution cathode catalyst layer from the inner side to the outer side enables the guidance of gas diffusion towards the exterior of the integrated membrane. Additionally, the hydrogen evolution cathode catalyst layer is prepared layer-by-layer using cathode slurry; during this layer-by-layer preparation process, the mass ratio of pore-forming agent to catalyst in the slurry must be increased sequentially to achieve the gradual increase in pore size.

### SUMMARY OF THE DISCLOSURE

On this basis, the present disclosure provides an alternative solution, specially a membrane electrode for hydrogen production by alkaline water electrolysis and a preparation method therefor and an electrolytic cell. Accordingly, a simple and easy-to-operate preparation method for such membrane electrode for hydrogen production by alkaline water electrolysis is proposed, which is based on porous membranes and alkaline anion exchange membranes. A membrane electrode having catalyst layers uniformly and firmly adhered to the membrane surfaces can be obtained via direct coating followed by hot pressing. The resulting membrane electrode exhibits good stability and enables a relatively low water electrolysis voltage.

To achieve the above objective, the present disclosure provides the following technical solutions:
In one aspect, the present disclosure provides a method for preparing a membrane electrode for hydrogen production by alkaline water electrolysis, comprising the following steps:
directly applying a catalyst slurry (or catalyst slurries) onto both sides of a membrane respectively, followed by drying and hot pressing the catalyst slurry (or catalyst slurries) to form catalyst layers on each surface of the membrane, thereby obtaining the membrane electrode;
wherein, the membrane is selected from a porous membrane or an alkaline anion exchange membrane; and
the catalyst slurry comprises a binder solution and a catalyst, wherein the binder solution is one or more selected from a perfluorosulfonic acid resin solution and a perfluorosulfonic acid ionomer dispersion, the binder solution has a mass concentration of 5% to 30%, preferably 5% to 20%; and the mass ratio of the binder solution to the catalyst is 1:1 to 4:1.

Through the above technical solution of the present disclosure, by using a perfluorosulfonic acid resin solution and/or perfluorosulfonic acid ionomer dispersion with a mass concentration of 5% to 30% (preferably 5% to 20%) as the binder solution, and controlling the mass ratio of the binder solution to the catalyst within the range of 1:1 to 4:1, the slurry can be well uniformly applied onto the surface of porous membranes or alkaline anion exchange membranes via direct coating, and a uniform and firm catalyst layer can be formed after drying and hot pressing. The resulting membrane electrode exhibits good stability and enables a relatively low water electrolysis voltage.

In certain preferred embodiments, the membrane has a thickness of 100 to 500 µm. The method for preparing the membrane electrode of the present disclosure, when used to prepare a membrane electrode for hydrogen production by alkaline water electrolysis, eliminates the need for a thick membrane (e.g., one with a thickness exceeding 500 µm). In the preparation of the membrane electrode, a membrane electrode with good stability can be obtained by direct coating and hot pressing, avoiding the issue of membrane vulnerability to penetration when excessively thin, which is common in the prior art.

In certain preferred embodiments, the porous membrane is selected from polysulfone, polyether sulfone, polyvinyl chloride, or polyphenylene sulfide porous membranes. In some preferred embodiments, the alkaline anion exchange membrane is selected from a quaternary ammonium salt anion exchange membrane, a polyether sulfone anion exchange membrane, or a polyphenylene ether anion exchange membrane. In some embodiments, the membrane used include, for example Zirfon UTP 500, Zirfon UTP 500+, and Zirfon UTP 220 membranes, etc.

In certain embodiments, the solvent in the binder solution is a mixed solvent of water and an organic solvent. The binder solution can be obtained directly from commercial sources, prepared in-house, or obtained by diluting the commercially available binder solution with the aforementioned solvent to achieve the desired concentration. Among them, the organic solvent is one or more selected from, for example, methanol, ethanol, n-propanol, isopropanol, and polyethylene glycol. In some embodiments, the mass ratio of the water to the organic solvent is 0.5:1 to 1:1.

In certain preferred embodiments, the catalyst has a particle size of 100 µm or less, and more preferably less than 40 µm. The inventor have found that controlling the particle size within the preferred range facilitates enhancing the dispersion of the catalyst in the binder solution and improving the coating uniformity of the catalyst slurry on the surface of the membrane.

In certain preferred embodiments, controlling the mass concentration of the binder solution within the range of 5% to 20% facilitates a further reduction in the water electrolysis voltage of the membrane electrode in the alkaline water electrolysis. However, a higher binder concentration may lead to an increase in the water electrolysis voltage. Additionally, controlling the mass ratio of the binder solution to the catalyst with the range of 1:1 to 4:1 is conducive to balancing good firmness of the catalyst layer and low water electrolysis voltage of the membrane electrode. In certain more preferred embodiments, on the basis that the mass fraction of the binder solution is controlled at 5% to 20%, and the mass ratio of the binder solution and the catalyst is controlled at 1:1 to 4:1 simultaneously, it is advantageous for obtaining membrane electrodes with superior performance, which not only have enhanced firmness of the catalyst layer, but also exhibit significantly lower water electrolysis voltage. In certain further preferred embodiments, when the mass fraction of the binder solution is 5% to 10%; and the mass ratio of the binder solution to the catalyst is 1:1 to 2:1, the membrane electrode can achieve further improved performance-exhibiting not only a catalyst layer with excellent fastness, but also a significantly lower water electrolysis voltage.

The coating amount of the catalyst slurry on the membrane surface can be determined according to the required thickness of the catalytic layer. In certain embodiments, the thickness of the catalyst layer is 2 to 50 µm; preferably, the thickness is 3 µm or more and less than 10 µm. Controlling the thickness of the catalyst layer within the preferred range can enhance the utilization rate of the catalyst and further decrease the water electrolysis voltage.

In some embodiments, the catalyst is selected from materials with hydrogen evolution catalytic activity or oxygen evolution catalytic activity. Catalysts with hydrogen evolution catalytic activity and catalysts with oxygen evolution catalytic activity can be conventional corresponding catalyst materials in the art, with no specific restrictions. Examples can include elemental metal, alloys, metal or non-metal compounds, etc., which exhibit corresponding activities. For example, the above-mentioned catalysts can be one or more of the elemental substances of Pt, Ru, Pd, and Ir, and their alloys, and the elemental substances, alloys, phosphides, and nitrides of Ni, Co, Mo, Cr, and Cu. Specifically, the catalyst includes, but is not limited to one or more of a Raney nickel catalyst, a nickel ferrite catalyst, a FeCoNi catalyst, a NiFe₂O₄ catalyst, a ZnNi(Fe₂O₄)₂ catalyst, etc., all of which are commercially available. Specifically, the catalyst layers formed on the both surfaces of the membrane are the cathode catalyst layer and the anode catalyst layer, respectively. The catalyst in the anode catalyst layer is a catalyst with at least oxygen evolution catalytic activity, and the catalyst in the cathode catalyst layer is a catalyst with at least hydrogen evolution catalytic activity; in addition, since some catalysts themselves exhibit good hydrogen evolution and oxygen evolution activities, the same catalyst can be used in both the anode catalyst layer and the cathode catalyst layer.

In some preferred embodiments, the method further comprises the following steps: after drying is completed, applying a hydrophobic protective film on the surface of the coating formed by the catalyst slurry, followed by hot pressing; after hot pressing is completed, peeling off the hydrophobic protective film. Preferably, the hydrophobic protective film is selected from aluminum foil, copper foil, tin foil, polytetrafluoroethylene (PTFE) film, polyethylene terephthalate (PET) film, PET film with a surfaced coated organosilicon layer, and PET- or polypropylene (PP)-supported PTFE film. The inventors have found that when the catalyst slurry is coated on the surface of the porous membrane or the alkaline anion exchange membrane and dried, and then a hydrophobic protective film was applied on the surface during the hot-pressing process, no adhesion occurs during the peeling process after hot pressing.

In some preferred embodiments, the hot pressing is carried out at a temperature of 80 to 180°C and a pressure of 3 to 10 MPa for 1 to 10 minutes. The hot pressing may be performed using a flat hot press. Moreover, performing hot pressing after drying to form a catalyst layer helps enhance the wettability and fluidity of the binder in the catalyst slurry, increase the bonding contact area, and enhance the firmness of the resulting catalyst layer on the surface of the membrane. In some preferred embodiments, the drying is carried out at a temperature of 60 to 150°C for 10 to 240 minutes. The coating is carried out at a speed of 20 to 100 mm/s. When the membrane electrode is prepared under the aforementioned preferred process conditions, it facilitates further enhancement of the uniformity of the catalyst coating on the membrane surface and its adhesion firmness. During coating, specifically, the catalyst slurry can be applied via doctor blading, roll to roll coating, slot die coating, or roller coating.

In the preferred embodiment, the hot pressing is carried out at a temperature of 120 to 160°C and a pressure of 5 to 8 MPa for 3 to 5 minutes. The drying is carried out at a temperature of 80 to 120°C for 30 to 60 minutes. The coating is carried out at a speed of 20 to 60 mm/s. When the preferred process conditions are adopted for the preparation of membrane electrodes, it facilitates further enhancement of the uniformity of the catalyst coating on the surface of the membrane and its adhesion firmness. In the preparation method of the present disclosure, when preparing the catalyst slurry, the catalyst may be dispersed in the binder solution by mechanical stirring or ultrasonic dispersion. In a preferred embodiment, the catalyst slurry is prepared by the following steps: mixing the binder solution with the catalyst and dispersing them at a high speed for 5 to 30 minutes through a homogenizer with a rotational speed of 5000 to 20000 revolutions per minute (rpm), preferably 8000 to 15000 rpm; then, subjecting the mixture to ultrasonic dispersion for 1 to 10 minutes, wherein the dispersion is carried out at a temperature of 0 to 10°C. The catalyst slurry prepared by this method exhibits good stability, with an instability index between 0.01 and 0.03.

A second aspect of the present disclosure provides a membrane electrode for hydrogen production by alkaline water electrolysis, which is prepared by the aforementioned method.

The present disclosure also provides an electrolytic cell for hydrogen production by alkaline water electrolysis, wherein the membrane electrode is the membrane electrode described above. Other structures of the electrolytic cell may adopt conventional structures in the art, which will not be elaborated here.

The technical solutions provided in the present disclosure offer the following beneficial effects:
The present disclosure provides a method for preparing a membrane electrode, based on a porous membrane or an alkaline ion exchange membrane, for hydrogen production by alkaline water electrolysis. Through a simple direct coating-hot pressing process, the method enables the formation of a uniform catalyst layer with strong adhesion to the surface of the membrane. This method features a simple process and convenient, efficient operation; moreover, the membrane electrode produced by this method exhibits a lower water electrolysis voltage.

### DESCRIPTION OF DRAWINGS

FIG. 1 shows a photograph of the membrane electrode in Example 1 after a test;
FIG. 2 shows a photograph of the membrane electrode in Comparative Example 1 after a test;
FIG. 3 shows a summary graph of the test results of water electrolysis voltage;
FIG. 4 shows a photograph of the hot-pressing effect in Comparative Example 4;
FIG. 5 shows a polarizing microscope photograph of the catalyst layer formed by catalyst slurry II of the membrane electrode in Example 2;
FIG. 6 shows a photograph of the membrane electrode in Example 3 after conducting a firmness test;
FIG. 7 shows a graph of the stability test results of the membrane electrode in Example 1;
FIG. 8 shows a photograph of the surface of the catalyst layer of the membrane electrode prepared in Example 1 before hot pressing;
FIG. 9 shows a polarizing microscope photograph of the catalyst layer on the surface of the membrane electrode in Comparative Example 5;
FIG. 10 shows a photograph of the membrane electrode in Comparative Example 1 after conducting a firmness test; and
FIG. 11 shows a graph of the stability test results of the membrane electrode in Comparative Example 1.

### DETAILED DESCRIPTION OF THE EMBODIMENTS

To facilitate the understanding of the present disclosure, the present disclosure will be further explained below in conjunction with embodiments. It should be understood that the following embodiments are provided merely for better understanding of the present disclosure, and are not intended that the present disclosure is only limited to the following embodiments.

If specific experimental steps or conditions are not specified in the embodiments, they can be carried out according to the operations of corresponding conventional experimental steps or conditions in the technical field. For the reagents or instruments used without indicated manufacturers, they are conventional products that are commercially available.

### Raw Materials

Renyi nickel catalyst and nickel ferrite catalyst were purchased from Jiangsu Leini Metal Technology Co., Ltd. and Beijing Deke Daojin Gold Science And Technology Co., Ltd., respectively;

Nafion solution was purchased from DuPont, US, wherein the solvent was a mixed solvent consisting of water and volatile organic compounds (mainly isopropanol) at a mass ratio of 34%: 46%, with a Nafion concentration of 20 wt%; and the Nafion solutions with lower concentrations used in the subsequent Examples were obtained by diluting the 20 wt% Nafion solution with a mixed solvent of water and isopropanol at a mass ratio of 34:46;

Zirfon UTP 500 membrane and Zirfon UTP 220 membrane were purchased from AGFA, Germany.

### Test Method

In the following Examples and Comparative Examples, the water electrolysis voltage test was conducted under the following conditions. For membrane electrode performance testing: the test was conducted using an IT6162B DC power supply, with a 30wt% of KOH solution as the electrolyte and a reaction temperature of 80±2°C, and the reaction temperature was monitored using a temperature controller. The reaction current densities were 0.4 A/cm² and 0.8 A/cm², respectively, and the test duration was 2 hours.

### Example 1

Raney nickel catalyst with a particle size of greater than 10 µm and less than 40 µm was weighed. A 10 wt% of Nafion solution was added, wherein the mass ratio of the Nafion solution to the catalyst was 2:1. The resulting mixture was dispersed at high speed (rotational speed of 10000 rpm) in a homogenizer for 10 minutes, followed by ultrasonically dispersed at a temperature of 0 to 10°C for 5 minutes, yielding a catalyst slurry;

Then, the catalyst slurry was blade-coated onto both sides of the Zirfon 220 membrane (with a thickness of 220 µm) at a speed of 20 mm/s, followed by vacuum drying at 80°C for 60 minutes. Subsequently, a PTFE membrane (a hydrophobic membrane) was selected as the protective film and placed between the hot press plate of the flat hot press and the catalyst slurry layer, respectively. Hot pressing was performed at 130°C and a pressure of 5 MPa for 5 minutes. After cooling, the protective film was removed to obtain the membrane electrode for alkaline water electrolysis. The thickness of the catalyst layer of the resulting membrane electrode was about 5 µm, as confirmed by SEM observation.

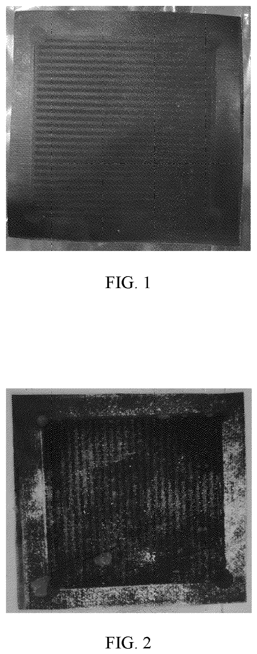

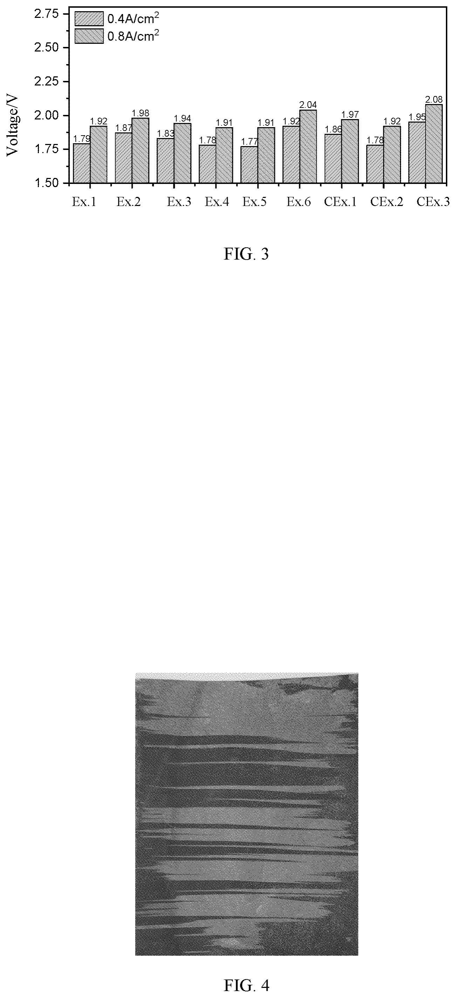

The membrane electrode was assembled into an electrolytic cell and its water electrolysis voltage was tested at current densities of 0.4 A/cm² and 0.8 A/cm². The test results are shown in FIG. 3. The surface of the membrane electrode was observed and photographed after the test, with the results shown in FIG. 1. As can be seen from FIG. 1, the coating on the surface of the membrane electrode remained intact after the test and no catalyst peeling occurred, indicating that the coating exhibits good firmness.

### Example 2

Nickel ferrite catalyst with a particle size of greater than 10 µm and less than 40 µm was weighed. A 8 wt% of Nafion solution was added, wherein the mass ratio of the Nafion solution to the catalyst was 3:1. The resulting mixture was dispersed at high speed (rotational speed of 8000 rpm) in a homogenizer for 10 minutes, followed by ultrasonically dispersed at a temperature of 0 to 10°C for 5 minutes, yielding catalyst slurry I. Then, Raney nickel catalyst with a particle size of greater than 10 µm and less than 40 µm was weighed. Subsequently, a 8 wt% of Nafion solution was added, wherein the mass ratio of the Nafion solution to the catalyst was 3:1. The resulting mixture was then ultrasonically dispersed for 3 hours, yielding catalyst slurry II;

Then, catalyst slurries I and II were blade-coated onto both sides of the Zirfon 500 membrane (with a thickness of 500 µm) at a speed of 20 mm/s, respectively, followed by vacuum drying at 120°C for 30 minutes. Subsequently, a PET membrane was selected as the protective film and placed between the hot press plate of the flat hot press and the catalyst slurry layer, respectively. Hot pressing was performed at 150°C and a pressure of 8 MPa for 3 minutes. After cooling, the protective film was removed to obtain the membrane electrode for alkaline water electrolysis. The thickness of the catalyst layer of the obtained membrane electrode was about 5 µm.

The membrane electrode was assembled into an electrolytic cell and its water electrolysis voltage was tested at current densities of 0.4 A/cm² and 0.8 A/cm². The test results are shown in FIG. 3. The surface of the membrane electrode was observed after the test, it can be seen that the coating on the surface of the membrane electrode remained intact with no catalyst peeling, indicating that the coating exhibits good firmness.

### Example 3

Raney nickel catalyst with a particle size of greater than 10 µm and less than 40 µm was weighed. A 15 wt% of Nafion solution was added, wherein the mass ratio of the Nafion solution to catalyst was 1.5:1. The resulting mixture was dispersed at high speed (rotational speed of 15000 rpm) in a homogenizer for 10 minutes, followed by ultrasonically dispersed at a temperature range of 0 to 10°C for 5 minutes, yielding a catalyst slurry;

Then, the catalyst slurry was blade-coated onto both sides of the Zirfon 220 membrane (with a thickness of 220 µm) at a speed of 60 mm/s, followed by vacuum drying at 80°C for 30 minutes. Subsequently, a PTFE membrane was selected as the protective film and placed between the hot press plate of the flat hot press and the catalyst slurry layer, respectively. Hot pressing was performed at 120°C and a pressure of 5 MPa for 3 minutes. After cooling, the protective film was removed to obtain the membrane electrode for alkaline water electrolysis. The thickness of the catalyst layer of the resulting membrane electrode was about 5 µm.

The membrane electrode was assembled into an electrolytic cell and its water electrolysis voltage was tested at current densities of 0.4 A/cm² and 0.8 A/cm². The test results are shown in FIG. 3. The surface of the membrane electrode was observed after the test, it can be seen that the coating on the surface of the membrane electrode remained intact with no catalyst peeling, indicating that the coating exhibits good firmness.

### Example 4

This Example was carried out with reference to Example 1, the difference was that the Nafion solution used had a mass fraction of 5 wt%.

The membrane electrode obtained in this Example was assembled into an electrolytic cell and its water electrolysis voltage was tested at current densities of 0.4 A/cm² and 0.8 A/cm². The test results are shown in FIG. 3. The surface of the membrane electrode was observed after the test, it can be seen that the coating on the surface of the membrane electrode remained intact with no catalyst peeling, indicating that the coating exhibits good firmness.

### Example 5

This Example was carried out with reference to Example 1, the difference was that the mass ratio of the binder solution to the catalyst used was 1:1.

The membrane electrode obtained in this Example was assembled into an electrolytic cell and its water electrolysis voltage was tested at current densities of 0.4 A/cm² and 0.8 A/cm². The test results are shown in FIG. 3. The surface of the membrane electrode was observed after the test, it can be seen that the coating on the surface of the membrane electrode remained intact with no catalyst peeling, indicating that the coating exhibits good firmness.

### Example 6

This Example was carried out with reference to Example 2, the difference was that the mass ratio of the binder solution to the catalyst used was 4:1. The membrane electrode obtained in this Example was assembled into an electrolytic cell and its water electrolysis voltage was tested at current densities of 0.4 A/cm² and 0.8 A/cm². The test results are shown in FIG. 3. The surface of the membrane electrode was observed after the test, it can be seen that the coating on the surface of the membrane electrode remained intact with no catalyst peeling, indicating that the coating exhibits good firmness.

### Comparative Example 1

This Comparative Example was carried out with reference to Example 1, the difference was that a Nafion solution with a mass fraction of 2.5 wt% was used.

The membrane electrode obtained in this Comparative Example was assembled into an electrolytic cell and its water electrolysis voltage was tested at current densities of 0.4 A/cm² and 0.8 A/cm². The test results are shown in FIG. 3. The surface of the membrane electrode was observed and photographed after the test, with the results shown in FIG. 2. As can be seen from FIG. 2, the catalyst on the surface of the membrane electrode was significantly peeled off after the test, indicating that the catalyst layer exhibits poor firmness.

### Comparative Example 2

This Comparative Example was carried out with reference to Example 1, the difference was that the mass ratio of the binder solution to the catalyst used was 0.5:1.

The membrane electrode obtained in this Comparative Example was assembled into an electrolytic cell and its water electrolysis voltage was tested at current densities of 0.4 A/cm² and 0.8 A/cm². The test results are shown in FIG. 3. The surface of the membrane electrode was observed after the test, it was found that the catalyst layer on the surface of the membrane electrode was peeled off, indicating that the catalyst layer exhibits poor firmness.

### Comparative Example 3

This Comparative Example was carried out with reference to Example 2, the difference was that the mass ratio of the binder solution to the catalyst used was 4.5:1.

The membrane electrode obtained in this Comparative Example was assembled into an electrolytic cell and its water electrolysis voltage was tested at current densities of 0.4 A/cm² and 0.8 A/cm². The test results are shown in FIG. 3.

### Comparative Example 4

This Comparative Example was carried out with reference to Example 1, the difference was that a hydrophilic PTFE membrane was used as the protective film during the hot-pressing process. After hot pressing and cooling, the protective film was removed, and it was found that the protective film was not completely peeled off, and the membrane electrode obtained after peeling off the remaining protective film had a large amount of protective film residues on its surface, as shown in FIG. 4.

### Comparative Example 5

This Comparative Example was carried out with reference to Example 2, the difference was that during the preparation of the catalyst slurry, the dispersion temperature was not controlled within the range of 0 to 10°C, but was set at 40°C. Under these conditions, the slurry significantly solidified. Additionally, the excessively high temperature caused rapid evaporation of the solvent, resulting in uneven dispersion of the slurry.

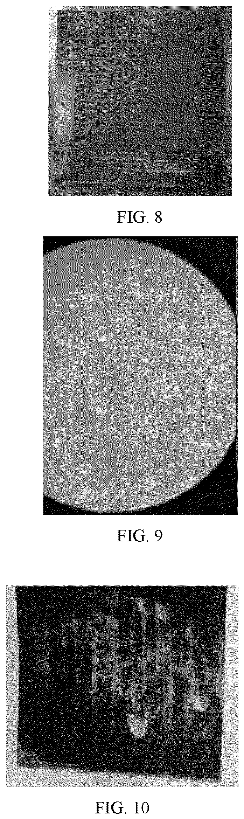

When preparing the membrane electrode in the present disclosure, a hot-pressing operation was carried out so as to improve the firmness of the catalyst layer. Taking Example 1 as a representative example, FIG. 8 shows a photograph of the surface of the catalyst layer before hot pressing during the membrane electrode preparation process in Example 1, while the photograph of the surface of the catalyst layer after hot pressing is similar to FIG. 1. It can be observed that hot pressing can significantly improve the uniformity and firmness of the catalyst layer.

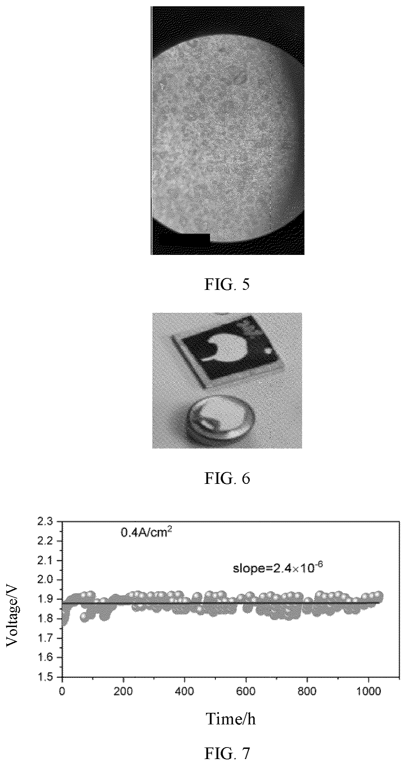

The catalyst layers on both sides of the membrane electrodes obtained in Examples 1 to 6 were photographed under a polarizing microscope. Taking the photographs of Example 2 as an example, the catalyst layer formed by catalyst slurry II is as shown in FIG. 5. It can be seen that the catalyst layer is evenly distributed; and the catalyst layer formed by catalyst slurry I is similar to that formed by catalyst slurry II and thus will not be repeated here. The catalyst layers of the membrane electrodes in other Examples of the present disclosure were photographed under a polarizing microscope, and the results are similar to that in Example 2, indicating that the catalyst layers are uniformly distributed. However, the catalyst layers of the membrane electrodes in Comparative Examples 2, 3, and 5 exhibited non-uniform distribution. Taking Comparative Example 5 as an example to illustrate the results, the catalyst layer formed by the catalyst slurry II is shown in FIG. 9, indicating that catalyst layer exhibits non-uniform distribution.

The membrane electrodes obtained in Examples 1 to 6 of the present disclosure were subjected to a firmness test using a bonding strength analyzer. The testing method included selecting a double-sided tape to bond the sample and the test base together, allowing the detector to record the critical force/strength at the moment of coating peeling off. The photograph after the test is shown in FIG. 6, which is a graph of the firmness test results of Example 3. As can be seen from FIG. 6, the black catalyst coating did not peel off separately; instead, what peeled off was the surface layer of the membrane loaded with the catalyst coating (i.e. the exposed white part in the figure). This indicates that the catalyst coating has high adhesion to the base membrane, demonstrating that the catalyst coating exhibits good firmness. The test results of the remaining Examples are similar to those of Example 3 and will not be repeated here. For the membrane electrodes of Comparative Examples 1 to 2 and 4 to 5, the catalyst coating on the surface of the membrane electrode could be easily peeling off when rubbed by hand, indicating that the coating exhibits poor firmness. Taking Comparative Example 1 as an example, its result is shown in FIG. 10. In contrast, the membrane electrodes prepared in the Examples of the present disclosure showed no peeling off when their catalyst coatings were rubbed by hand.

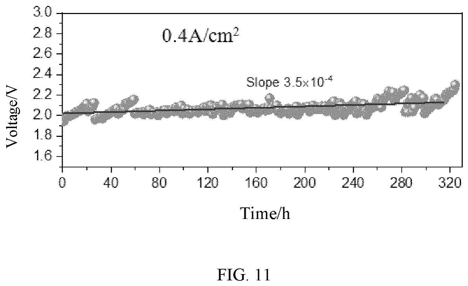

Stability tests were conducted on the membrane electrodes obtained in Examples 1 to 6 of the present disclosure at a reaction current density of 0.4 A/cm², the testing method included using a 30wt% KOH solution as the electrolyte at a reaction temperature of 80±3°C. The reaction current was 10A and the test duration was 1000 hours. After the test, it was found that the coating on the surface of the membrane electrode still remained intact and the voltage decay rate was relatively low. The stability test results of Example 1 are shown in FIG. 7, with a voltage decay rate of 2.4 µV/h. Other Examples were similar to Example 1 and exhibited substantially comparable voltage decay rate levels (all within the level range of 1 to 10 µV/h). Stability tests were conducted in Comparative Examples 1 to 3, with the testing methods referring to those of the previous Examples 1 to 6, the differences was that due to the poor stability of Comparative Examples, the test duration only lasted for 320 hours, and the results showed that the voltage decay rates were relatively high, reaching a level of about 1 to 10 mV/h. Taking Comparative Example 1 as an example, the results are shown in FIG. 11, with a voltage decay rate of 0.35 mV/h.

It will be readily understood that the above Examples are merely examples for clear illustration and do not mean that the present disclosure is limited thereto. For those of ordinarily skilled in the field to which the present disclosure pertains, other forms of changes or variations may be made based on the above explanations. It is neither necessary nor possible to exhaustively list all embodiments here. However, the obvious changes or variations derived therefrom still fall within the protection scope of the present disclosure..

## Claims

1. A method for preparing a membrane electrode for hydrogen production by alkaline water electrolysis, wherein the method comprises the following steps:
directly applying a catalyst slurry (or catalyst slurries) onto both sides of a membrane, followed by drying and hot pressing the catalyst slurry (or catalyst slurries) to form catalyst layers on each surface of the membrane, thereby obtaining the membrane electrode;
wherein the membrane is selected from a porous membrane or an alkaline anion exchange membrane; preferably the membrane has a thickness of 100 to 500 µm; and
the catalyst slurry comprises a binder solution and a catalyst, wherein the binder solution is one or more selected from a perfluorosulfonic acid resin solution and a perfluorosulfonic acid ionomer dispersion, and the binder solution has a mass concentration of 5% to 30%, preferably 5% to 20%; and the mass ratio of the binder solution to the catalyst is 1:1 to 4:1.

2. The method according to claim 1, wherein the porous membrane is selected from polysulfone, polyether sulfone, polyvinyl chloride or polyphenylene sulfide porous membranes;
and/or, the alkaline anion exchange membrane is selected from a quaternary ammonium salt anion exchange membrane, a polyether sulfone anion exchange membrane, or a polyphenylene ether anion exchange membrane;
and/or, the solvent in the binder solution is a mixed solvent of water and an organic solvent, wherein the organic solvent is one or more selected from methanol, ethanol, n-propanol, isopropanol, and polyethylene glycol; and preferably, the mass ratio of the water to the organic solvent is 0.5:1 to 1:1;
and/or, the catalyst has a particle size of 100 µm or less, and more preferably less than 40 µm.

3. The method according to any one of claims 1 to 2, wherein,
the binder solution has a mass concentration of 5% to 20%; and the mass ratio of the binder solution to the catalyst is 1:1 to 4:1;
further preferably, the binder solution has a mass concentration of 5% to 10%; and the mass ratio of the binder solution to the catalyst is 1:1 to 2:1.

4. The method according to any one of claims 1 to 2, wherein, the catalyst layer has a thickness of 2 to 50 µm, preferably 3 µm or more and less than 10 µm.

5. The method according to any one of claims 1 to 2, wherein the catalyst is selected from materials with hydrogen evolution catalytic activity or oxygen evolution catalytic activity.

6. The method according to any one of claims 1 to 2, wherein it comprises the following steps: after drying is completed, applying a hydrophobic protective film on the surface of the coating formed by the catalyst slurry, followed by hot pressing; after hot pressing is completed, peeling off the hydrophobic protective film;
preferably, the hydrophobic protective film is selected from aluminum foil, copper foil, tin foil, polytetrafluoroethylene film, polyethylene terephthalate film, PET film with a surfaced coated organosilicon layer, and PET- or polypropylene-supported PTFE film.

7. The method according to any one of claims 1 to 2, wherein,
the hot pressing is carried out at a temperature of 80 to 180°C and a pressure of 3 to 10 MPa for 1 to 10 minutes;
the drying is carried out at a temperature of 60 to 150°C for 10 to 240 minutes;
the coating is carried out at a speed of 20 to 100 mm/s;
preferably, the hot pressing is carried out at a temperature of 120 to 160°C and a pressure of 5 to 8 MP for 3 to 5 minutes; the drying is carried out at a temperature of 80 to 120°C for 30 to 60 minutes; and the coating is carried out at a speed of 20 to 60 mm/s.

8. The method according to any one of claims 1 to 2, wherein the catalyst slurry is prepared by the following steps:
mixing the binder solution with the catalyst and dispersing them for 5 to 30 minutes through a homogenizer, then subjecting the resulting mixture to ultrasonic dispersion for 1 to 10 minutes, wherein the dispersion is carried out at a temperature of 0 to 10°C.

9. A membrane electrode for hydrogen production by alkaline water electrolysis, wherein the membrane electrode is prepared by the method according to any one of claims 1 to 8.

10. An electrolytic cell for hydrogen production by alkaline water electrolysis, wherein the membrane electrode therein is the membrane electrode according to claim 9.
